**Europäisches Patentamt**

**European Patent Office**

**Office européen des brevets**

(19)

(11) Publication number : **0 514 453 B1**

## EUROPEAN PATENT SPECIFICATION

(12)

(45) Date of publication of patent specification :
20.10.93 Bulletin 93/42

(51) Int. Cl.⁵ : **C02F 3/34, C02F 3/08**

(21) Application number : **91904167.3**

(22) Date of filing : **08.01.91**

(86) International application number :
**PCT/SE91/00010**

(87) International publication number :
**WO 91/12208 22.08.91 Gazette 91/19**

(54) **TREATMENT OF WASTEWATER.**

(30) Priority : **07.02.90 SE 9000437**

(43) Date of publication of application :
**25.11.92 Bulletin 92/48**

(45) Publication of the grant of the patent :
**20.10.93 Bulletin 93/42**

(84) Designated Contracting States :
**AT DE ES FR IT SE**

(56) References cited :
**EP-A- 0 126 643**
**CA-A- 1 082 821**
**CA-A- 1 103 375**
**GB-A- 1 581 832**
**SE-A- 8 205 489**
**US-A- 4 468 326**

(73) Proprietor : **SUNDS DEFIBRATOR
INDUSTRIES AKTIEBOLAG
S-851 94 Sundsvall (SE)**

(72) Inventor : **LARSSON, Leif, L.
Paeskvaegen 38
S-863 00 Sundsbruck (SE)**
Inventor : **SAEFSTROEM, Christer K.S.
Via Ricreatorio, 48
I-Opicina Trieste (IT)**

(74) Representative : **Sundqvist, Hans
Sunds Defibrator Industries Aktiebolag
Patents Dept. Strandbergsgatan 61
S-112 51 Stockholm (SE)**

EP 0 514 453 B1

Jouve, 18, rue Saint-Denis, 75001 PARIS

## Description

This invention relates to the cleaning of wastewater (condensate) from a process for the manufacture of sheets of disintegrated lignocellulose-containing material. Such processes can be intended for the production of fibreboard according to the dry method, for example hardboard or medium density fibreboard (MDF). It also includes processes for the manufacture of particle board. The starting material is lignocellulose-containing material, such as wood, straw, bagasse etc.

At the manufacture of fibreboard of MDF-type, the fibre material first is defibered under pressure in a refiner, and thereafter binding agent is mixed with the fibres. After that, drying is carried out, usually in a tube drier with gas at high temperature, where the gas absorbs the moisture from the fibres. After the drying, fibres and gas are separated, and the fibres are transported to a lay station where the fibres by means of an air jet are deposited on an air pervious support so that a fibre mat is formed. Another method is to distribute the fibres mechanically on a dense web. The mat thus formed is then hot pressed in the production line to form a complete MDF-board.

The binding agent used normally is glue of the type urea formaldehyde resin. This implies that at the drying of the material a greater or smaller amount of water-soluble formaldehyde follows along with the drying gas. As the moisture quotient prior to the drying can be about 100 % and after the drying 10 %, consequently large liquid amounts are here involved.

After the drying gas has been separated from the fibre material, for example in a cyclone, the liquid content is condensed out of the gas. This wastewater (condensate) contains a considerable amount of impurities, for example formaldehyde in aqueous solution. This wastewater must be purified before it can be discharged or recycled. Solid material, for example, can be separated by screening or sedimentation, and COD can be reduced satisfactorily by normal biological purification. The degradation of formaldehyde, however, causes problems in conventional purification processes.

The manufacture of particle board, where binding agent of type urea formaldehyde resin is used, also produces formaldehyde-containing condensate. The handling problems of the condensate in this case are the same as described above in connection with fibrebcard manufacture.

The present invention implies that the formaldehyde content in the wastewater can be reduced considerably by utilizing a micro-organism (sponge) of the species Thichoderma. The characterizing features of the invention become apparent from the attached claims.

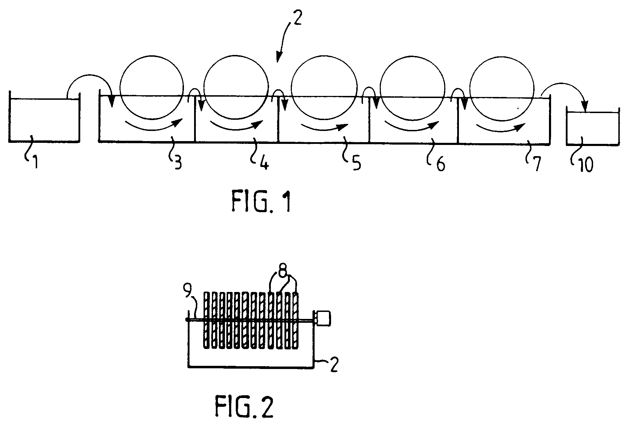

The invention is described in greater detail in the following, with reference to the accompanying drawing showing an embodiment of a system for reducing formaldehyde according to the invention, in which drawing Fig. 1 is a schematic lateral view of a cross-section of the system, and Fig. 2 is a cross-section through the system.

Wastewater in the form of condensate from a drier in a plant for the manufacture of MDF-board is supplied to a buffer tank 1. From there the wastewater is pumped to a treatment vessel 2, which is divided by partitions into a plurality of sections 3-7 separated from each other. These sections are arranged in series so that the wastewater passes through the sections in steps. In each section 3-7, a number of disks 8 are mounted rotatably on a horizontal shaft 9, so that the disks partially, preferably to about half their size, are immersed below the liquid level in the section. The disks 8 should have a diameter of at least 0,5 m and can be located in a spaced relationship of 1-3cm. The disk thickness can be 2-3 cm. A suitable disk material is cellular plastic, for example polystyrene, and the disks can be provided on their surface with a fine net. Micro-organisms of the type Trichoderma Harzianum are supplied to one or several sections, while bacteria for conventional biological purification can be supplied to the remaining sections. The micro-organisms need be added only at the starting of the process, whereafter they are self-generating.

According to the enbodiment shown, the first three sections 3-5 contain the sponge in question, and the remaining two sections 6,7 contain bacteria for biological purification.

The purification process takes place under aerobe conditions, and oxygen is supplied to the micro-organisms in that they come into contact with air.

The wastewater is passed after the treatment vessel 2 through a collecting tank 10, before it can be discharged.

The step-by-step purification, alternatively, can be carried out in other devices, for example biological filter, biorotor or similar equipment, which comprises surfaces on which the micro-organisms can deposit.

Example :

In a system with a treatment vessel of 1,2 $m^3$ divided into five sections according to above, the total surface area of the disks was 60 $m^2$, and the rotation speed was 5 rpm. The amount of treated wastewater was 1 $m^3$/24

hours. The staying time for the liquid in the treatment vessel is slightly above 24 hours. The ambient air temperature was controlled, and the best result was obtained at 25-30°C. A significantly reduced efficiency was observed at temperatures below 20°C and above 40°C. The pH-value should be in the interval 4-9, preferably 7-8,5.

The added wastewater had a formaldehyde concentration of 250-600 mg/l, COD was 450-900 mg/l, and pH was 4,5, which corresponds to the values for a condensate from a normal fibreboard manufacture (Ex. I). For testing the efficiency, additional formaldehyde was added to the condensate, so that the formaldehyde concentration was 650-1300 mg/l, COD was 500-1000 mg/l, and pH was 6-7 (Ex. II).

With the ingoing concentrations according to above, the formaldehyde content was reduced in steps in the five sections as follows:

| Location | Measured concentration mg/l | |
|---|---|---|
| | I | II |
| Before step 1 | 277 | 1090 |
| In step 1 | 15,3 | 252 |
| " " 2 | 1,95 | 191 |
| " " 3 | 0,29 | 66 |
| " " 4 | – | 17 |
| " " 5 | 0,23 | 7 |
| After step 5 | 0,23 | 1,4 |

COD was simultaneously reduced as follows:

| Location | Measured concentration mg/l | |
|---|---|---|
| | I | II |
| Before step 1 | 486 | 1090 |
| In step 3 | 56 | 260 |
| After step 5 | 36 | 48 |

The pH-value at these tests varied as follows:

| Location | pH-Value | |
|---|---|---|
| | I | II |
| Before step 1 | 5,3 | 6,85 |
| In step 1 | 7,65 | 7,00 |
| " " 2 | 8,05 | 7,05 |
| " " 3 | 8,40 | 7,70 |
| " " 4 | 8,45 | 8,20 |
| " " 5 | 8,48 | 8,45 |

At the addition of nutritional matters, proteins, vitamins and minerals, certainly an increased growth of the micro-organisms on the disks could be observed. This growth, however, did not cause clogging of the space between the disks. The tests showed, that the system operates excellent without nutrition supply.

The micro-organisms accumulated on the disks must be removed periodically, for example mechanically

3

or by water sprays.

When the system is taken out of service, water containing formaldehyde in an amount of at least 100 mg/l must be added in order to maintain the micro-organisms when no other condensate is available.

On the basis of these test results, a system could be dimensioned as follows:

The treatment vessel should have a volume of 100-150 m³ divided into 6 sections.

Capacity: at least 4 m³/h or 96 m³/24 hours.

The total surface area on the disks should be 100 m²/m³ treated condensate, and the disk diameter should be 2,5-3 m.

The spacing between the disks should be sufficiently great to avoid clogging, preferably 2-3 m.

The capacity of the buffer tank 1 should correspond to the volume of condensate to be treated per 24 hours.

The final collecting tank 10 should have a capacity corresponding to two hours treated condensate.

The condensate should be screened before the treatment in order to remove fibres following along.

The invention, of course, is not restricted to the embodiments shown, but can be varied within the scope of the appended claims.

## Claims

1. A method of biological purification of condensate from a process for the manufacture of sheets of disintegrated lignocellulose-containing material, such as fibreboard produced according to the dry method or particle board, where the condensate contains formaldehyde,

   **characterized in** that the formaldehyde concentration is over 100 mg/l and the purification is carried out in several steps substantially with the help of a microorganism of the type Trichoderma Harzianum, whereby the temperature during the treatment is maintained in the interval 20-40°C, preferably in 25-35°C, and the pH-value is in the interval 4-9, preferably 7-8,5.

2. A method as defined in claim 1,

   **characterized in** that the purification is carried out in several steps in series, in that the condensate is pumped between different sections (3-7) in a treatment vessel (2).

3. A method as defined in claim 2,

   **characterized in** that the micro-organism is allowed to grow on several rotatable disks (8), which are partially immersed below the liquid level in each section in the vessel (2).

4. A method as defined in claim 2 or 3,

   **characterized in** that the micro-organism is added in at least three steps, and that in at least one subsequent step bacteria for conventional biological purificcation are added.

5. A method as defined in anyone of the preceding claims,

   **characterized in** that the purification process takes place under aerobe conditions, and oxygen is supplied to the micro-organism in that it comes into contact with air.

## Patentansprüche

1. Verfahren zum biologischen Reinigen von Kondensat aus einem Verfahren für die Herstellung von Bahnen aus zerkleinertem, Lignozellulose enthaltendem Material, wie Faserplatten, die durch das Trockenverfahren hergestellt sind, oder Spanplatten, wobei das Kondensat Formaldehyd enthält,

   **dadurch gekennzeichnet,**

   daß die Formaldehydkonzentration über 100 mg/l liegt und die Reinigung in verschiedenen Stufen im wesentlichen mit Hilfe von Mikroorganismen des Typs Trichoderma Harzianum ausgeführt wird, wobei die Temperatur während der Behandlung im Bereich von 20-40°C, vorzugsweise 25-35°C, und der pH-Wert im Bereich von 4-9, vorzugweise 7-8,5, gehalten wird.

2. Verfahren nach Anspruch 1,

   dadurch gekennzeichnet,

   daß die Reinigung in mehreren Schritten nacheinander ausgeführt wird, wobei das Kondensat zwischen verschiedenen Abschnitten (3-7) in einem Behandlungsgefäß (2) gepumpt wird.

**3.** Verfahren nach Anspruch 2,
dadurch gekennzeichnet,
daß die Mikroorganismen auf verschiedenen drehbaren Scheiben (8) wachsengelassen werden, die teilweise unter dem Flüssigkeitsspiegel in jedem Abschnitt in dem Gefäß (2) eingetaucht sind.

**4.** Verfahren nach Anspruch 2 oder 3,
dadurch gekennzeichnet,
daß die Mikroorganismen in wenigstens drei Stufen zugegeben werden, und daß in wenigstens einer folgenden Stufe Bakterien für herkömmliche biologische Reinigung zugegeben werden.

**5.** Verfahren nach einem der vorhergehenden Ansprüche,
dadurch gekennzeichnet,
daß das Reinigungsverfahren unter aeroben Bedingungen stattfindet und den Mikroorganismen Sauerstoff zugeführt wird, wobei sie mit Luft in Berührung kommen.

**Revendications**

**1.** Procédé de purification biologique de condensat provenant d'un procedé pour fabriquer des feuilles de matière contenant de la lignocellulose désintégrée, telle qu'un carton dur produit selon le procédé à sec ou une plaque de particules, où le condensat contient du formaldéhyde, caractérisé en ce que la concentration de formaldéhyde dépasse 100 mg/l et la purification est effectuée en plusieurs étapes pratiquement avec l'aide d'un microorganisme du type Trichoderma Harzianum, en maintenant par ce moyen la température pendant le traitement dans un intervalle de 20 à 40°C, de préférence de 25 à 35°C, et la valeur du pH est dans l'intervalle 4 à 9, de préférence 7 à 8,5.

**2.** Procédé selon la revendication 1, caractérisé en ce que la purification est effectuée en plusieurs étapes en série, en ce que le condensat est pompé entre les différentes sections (3 à 7) dans un récipient de traitement (2).

**3.** Procédé selon la revendication 2, caractérisé en ce que l'on laisse croître le micro-organisme sur plusieurs disques rotatifs (8), qui sont partiellement immergés au-dessous du niveau du liquide dans chaque section dans le récipient (2).

**4.** Procédé selon la revendication 2 ou 3, caractérisé en ce que le micro-organisme est ajouté en au moins trois étapes, et que dans au moins une étape ultérieure, des bactéries pour une purification biologique classique sont ajoutées.

**5.** Procédé selon l'une quelconque des revendications précédentes, caractérisé en ce que le procédé de purification a lieu dans des conditions aérobies, et l'oxygène est fourni au micro-organisme de sorte qu'il entre en contact avec l'air.

FIG. 1

FIG. 2